# EUROPEAN PATENT APPLICATION

(11) **EP 3 806 022 A1**
(43) Date of publication of application: **14.04.2021**
(21) Application number: 19916903.8
(22) Date of filing: 25.02.2019
(51) Int. Cl.: G06Q 30/06

(54) **INFORMATION PROCESSING SYSTEM AND INFORMATION PROCESSING METHOD**

(71) Applicant: QBIT Robotics Corporation, Nakano-ku, Tokyo 164-0003 (JP)
(72) Inventor: HIROYA, Shuichi, Tokyo 164-0003 (JP)
(74) Representative: MacDougall, Alan John Shaw
(86) International application number: PCT/JP2019/007075
(87) International publication number: WO 2020/174537

(57) **Abstract**

Provided are analyzer (120) that analyzes person information in relation to a person included in an image having been captured by imaging unit (110), database (130) that stores in itself the person information and environment information indicating an environment in which the relevant information processing system is installed, utterance unit (140) that makes an utterance having an utterance content in response to the person information and the environment information, and reinforcement learning unit (150) that, for each combinations of the person information and the environment information, performs learning to update a first score corresponding to the utterance content, based on result information indicating a result of the utterance having been made by utterance unit (140), and utterance unit (140) makes the utterance having the utterance content associated with the first score having a maximum value of the first score for the combination.

## Description

### [Technical Field]

The present invention relates to an information processing system and an information processing method.

### [Background Art]

Recently various systems have been widely introduced with an AI (Artificial Intelligence) functionality. Their focus is to ease the shortage of labor and manpower. For example, a system in which a robot performs customer service, analyzes an image having been captured, grasps a request of a customer, and performs an action for the customer service, has been considered (see, for example, Patent Literature 1).

### [Citation List]

### [Patent Literature]

[Patent Literature 1] JP2018-84998A

### [Summary of Invention]

### [Technical Problem]

In the technology as described above, the robot performs only a predetermined customer service motion to a customer and understands the request of the customer from the reaction of the customer to the performed motion. Therefore, there is a problem in which the motion, in response to a customer and the status of the customer, cannot be performed and thus flexible customer service cannot be executed.

The objective of the present invention is to provide an information processing system and an information processing method that can perform flexible customer service.

### [Solution to Problem]

An information processing system according to the present invention includes an imaging unit, an analyzer that analyzes a person information in relation to a person included in an image having been captured by the imaging unit, a database that stores in itself the person information and environment information indicating an environment in which the information processing system is installed, an utterance unit that makes an utterance having an utterance content in response to the person information and the environment information, and a reinforcement learning unit that retrieves the person information and the environment information from the database, and that, for each combinations of the person information and the environment information that have been retrieved, performs learning to update a first score corresponding to the utterance content, based on result information indicating a result of the utterance having been made by the utterance unit, and the utterance unit makes the utterance having the utterance content associated with the first score having a maximum value of the first score for the combination.

An information processing system according to the present invention includes a camera, a robot, and an information processing apparatus. The information processing apparatus includes an analyzer that analyzes a person information in relation to a person included in an image having been captured by the camera, a database that stores in itself the person information and environment information indicating an environment in which the information processing system is installed, an utterance controller that instructs the robot to make an utterance having an utterance content in response to the person information and the environment information, and a reinforcement learning unit that retrieves the person information and the environment information from the database, and that, for each combinations of the person information and the environment information that have been retrieved, performs learning to update a first score corresponding to the utterance content, based on result information indicating a result of the utterance having been instructed by the utterance controller. The utterance controller instructs the robot to make the utterance having the utterance content associated with the first score having a maximum value of the first score for the combination, and the robot includes a voice output unit that outputs a voice indicated by the utterance content having been instructed by the utterance controller.

Furthermore, an information processing method according to the present invention is an information processing method in an information processing system, and performs processing for analyzing a person information in relation to a person included in an image having been captured by a camera, processing for, from a database that stores in itself the person information and environment information indicating an environment in which the information processing system is installed, retrieving the person information and the environment information, processing for making an utterance having an utterance content associated with a first score having a maximum value for a combination of the person information and the environment information that have been retrieved, and processing for performing learning to update the first score based on result information indicating a result of the utterance having been made.

### [Advantageous Effects of Invention]

In the present invention, flexible customer service can be performed.

### [Brief Description of Drawings]

[FIG. 1] FIG. 1 is a diagram illustrating a first embodiment of an information processing system according to the present invention.
[FIG. 2] FIG. 2 is a diagram illustrating an example of scores possessed by a reinforcement learning unit illustrated in FIG. 1.
[FIG. 3] FIG. 3 is a diagram illustrating an example of inputs/outputs of reinforcement learning performed in the reinforcement learning unit illustrated in FIG. 1.
[FIG. 4] FIG. 4 is a flowchart for illustrating an example of an information processing method in the information processing system illustrated in FIG. 1.
[FIG. 5] FIG. 5 is a diagram illustrating a second embodiment of the information processing system according to the present invention.
[FIG. 6] FIG. 6 is a diagram for illustrating an example of processing for specifying the positions of persons having been captured by a camera illustrated in FIG. 5.
[FIG. 7] FIG. 7 is a diagram illustrating an example of associations of execution tasks with events capable of being grasped from combinations of person information and environment information that are stored in a database, the associations being referred by execution task selector 171 illustrated in FIG. 5.
[FIG. 8] FIG. 8 is a diagram illustrating an example of the configuration of software in the information processing system illustrated in FIG. 5.
[FIG. 9] FIG. 9 is a diagram illustrating an example of associations stored in a person position/facial expression/relationship/attribute database illustrated in FIG. 8.
[FIG. 10] FIG. 10 is a diagram illustrating an example of kinds of utterance data illustrated in FIG. 8 and indexes intended to be increased by the utterance data.
[FIG. 11A] FIG. 11A is a diagram illustrating an example of information that is registered as utterance data illustrated in FIG. 8.
[FIG. 11B] FIG. 11B is a diagram illustrating an example of information that is registered as utterance data illustrated in FIG. 8.
[FIG. 12] FIG. 12 is a flowchart for illustrating an example of an information processing method in the information processing system illustrated in FIG. 5.

### [Description of Embodiments]

Hereinafter, embodiments of the present invention will be described with reference to the drawings.

### [First Embodiment]

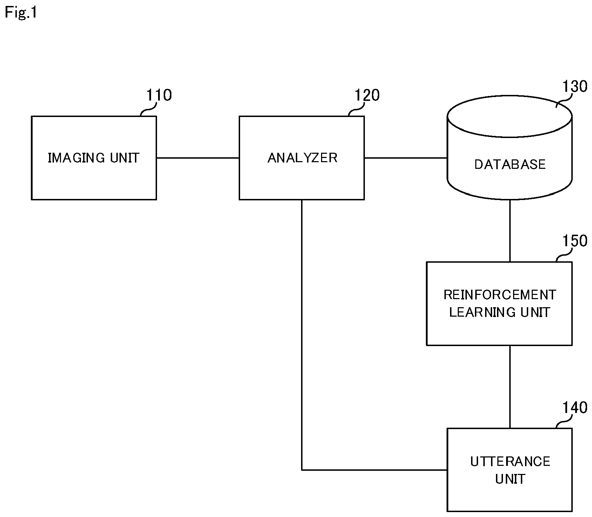

FIG. 1 is a diagram illustrating a first embodiment of an information processing system according to the present invention. As illustrated in FIG. 1, the information processing system in the present embodiment includes imaging unit 110, analyzer 120, database 130, utterance unit 140, and reinforcement learning unit 150.

Imaging unit 110 images a person who becomes a target.

Analyzer 120 analyzes person information in relation to the person included in the image having been captured by imaging unit 110.

Database 130 stores in itself the person information and environment information indicating an environment in which the information processing system is installed.

The person information is information that is related to the person included in the image having been captured by imaging unit 110 and that indicates, for the person included in the image having been captured by imaging unit 110, for example, a position, a sex, an age group, a facial expression (for example, a smiling face, a surprised face, a sad face, an angry face, or the like), a height, clothes, a race, a person-to-person relationship, and the like. Furthermore, the person information also includes a spoken language used by the person included in the image having been captured by imaging unit 110, and an order content indicating the content of an order having been made by the person. The spoken language is information resulting from the analysis by analyzer 120 based on voices having been collected using a sound collecting member (not illustrated), such as a microphone, installed near imaging unit 110. Furthermore, the order content corresponds to the content of an order having been received by an input unit (not illustrated) for use in ordering. Furthermore, when it is authenticated (identified) that the person included in the image having been captured by imaging unit 110 is a customer who is already registered, the person information may be personal identification information granted to the customer (for example, a customer ID number or the like). When the personal identification information is already registered, previous order contents (an ordered product, the number of orders, and the like) in relation to a customer who is identified from the personal identification information are also included in the person information.

The environment information indicates the number of persons, a current date, a time zone, weather, an operation status (processing load status) of the system, a location category, a shop state determined based on a remaining number of orders, an order processing state, and the like. The environment information may contain at least one of the above-described pieces of information. The operation status of the system is information indicating in what state the system currently is, such as "an order of a product has been received from a customer", "cooking is filled with orders", no person is visible in the vicinity of the shop", "cooking is performed", "the remaining number of orders is zero", a robot in charge of cooking has placed a product at a supply position", or the like.

The utterance content is a content indicating a specific phrase of an utterance made by utterance unit 140. The utterance content indicates the content of an utterance made to the vicinity of utterance unit 140, the content of a speech spoken to the person included in the image having been captured by imaging unit 110, or the like. For example, the utterance content is like the content of an utterance that is made by a shop staff of a common shop in response to the status of the shop, such as a content for calling in for the purpose of customer attraction, a content for attracting attentions of persons existing in the vicinity, a content for prompting an additional order to a customer having ordered a product, a soliloquy, a news source, product clarification, or the like.

The score is a value (the first score) resulting from learning performed by reinforcement learning unit 150 based on result information indicating the result of an utterance having been made by utterance unit 140. This score is progressively updated by reinforcement learning unit 150 as reinforcement learning unit 150 performs reinforcement learning. Here, the result information is information including at least one of reactions of a customer, sales information indicating the variations of sales contents and a sales amount, and the like, at the time after utterance unit 140 has made an utterance. The reactions of a customer are obtained by allowing analyzer 120 to analyze the change of a facial expression, and the like in relation to the person included in the image having been captured by imaging unit 110.

Utterance unit 140 makes an utterance having an utterance content in response to the person information and the environment information. Utterance unit 140 makes an utterance having an utterance content in response to the person information and the environment information, the utterance content being associated with a first score having a maximum value for a combination of the person information and the environment information.

Reinforcement learning unit 150 retrieves the person information and the environment information from database 130. Reinforcement learning unit 150 performs learning and updates, for each combinations, namely, the combinations of the person information and the environment information that have been retrieved, a first score corresponding to an utterance content, based on result information indicating the result of an utterance having been made by utterance unit 140.

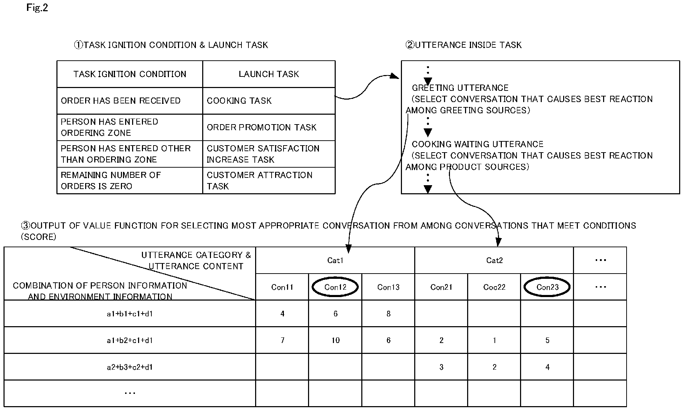

FIG. 2 is a diagram illustrating an example of scores possessed by reinforcement learning unit 150 illustrated in FIG. 1. As illustrated in FIG. 2, reinforcement learning unit 150 illustrated in FIG. 1 includes launch tasks that are set in such a way as to correspond to operation statuses of the system that are included in the environment information. Reinforcement learning unit 150 has utterance categories corresponding to a launch task having been launched, and includes, for each combinations of the person information and the environment information, scores corresponding to utterance contents included in each of the utterance categories. In FIG. 2, the person information is individually denoted by "al", "a2", "b1", "b2", and "b3". In FIG. 2, the environment information is individually denoted by "c1", "c2", and "d1". Furthermore, in FIG. 2, the utterance categories are individually denoted by "Cat 1" and "Cat 2". Furthermore, in FIG. 2, utterance contents corresponding to utterance category "Cat 1" are individually denoted by "Con 11", "Con 12", and "Con 13". Furthermore, in FIG. 2, utterance contents corresponding to utterance category "Cat 2" are individually denoted by "Con 21", "Con 22", and "Con 23". Here, in FIG. 2, when person information "a" represents sex, "a1" and "a2" can be respectively represented as a male and a female. Other person information and the environment information are the same.

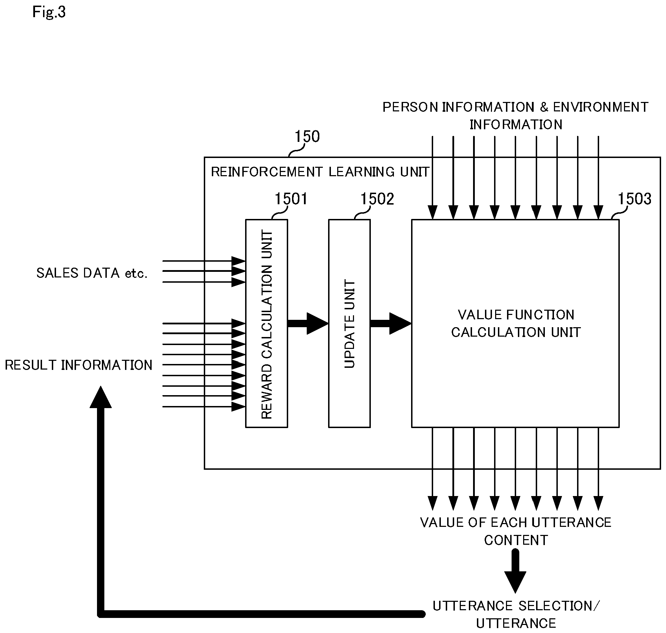

FIG. 3 is a diagram illustrating an example of the inputs/outputs of reinforcement learning performed in reinforcement learning unit 150 illustrated in FIG. 1. As illustrated in FIG. 3, reinforcement learning unit 150 illustrated in FIG. 1 includes reward calculation unit 1501, update unit 1502, value function calculation unit 1503. Reinforcement learning unit 150 performs reinforcement learning based on the results of an utterance having been made, result information related to the utterance, post-utterance sales data (products, quantities, money amounts, and the like), and the like to calculate a reward, performs update, and inputs the update into value function calculation unit 1503. Thereafter, based on person information and environment information, values (scores) of individual utterance contents are output. Value function calculation unit 1503 can be implemented using a neural network, but an analysis method performed by value function calculation unit 1503 is not particularly limited.

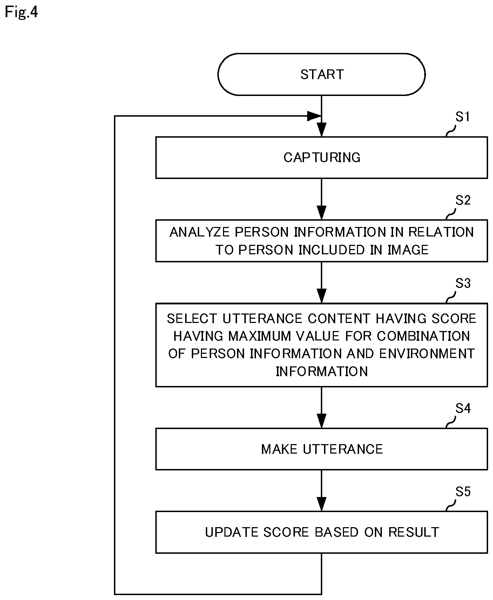

Hereinafter, an information processing method in the information processing system illustrated in FIG. 1 will be described. FIG. 4 is a flowchart for illustrating an example of the information processing method in the information processing system illustrated in FIG. 1.

Firstly, when imaging unit 110 performs imaging (step S1), analyzer 120 analyzes person information in relation to a person included in an image having been captured by imaging unit 110 (step S2). Analyzer 120 writes the result of the analysis into database 130. Then, reinforcement learning unit 150 retrieves the person information from database 130, and calculates appropriate values of utterance contents based on the retrieved person information, environment information, and the utterance contents. Subsequently, utterance unit 140 selects a most appropriate utterance content (step S3). Specifically, utterance unit 140 selects an utterance content associated with a score having a maximum value for a combination of the person information and the environment information stored in database 130. Utterance unit 140 makes an utterance having the selected utterance content (step S4). Reinforcement learning unit 150 performs learning based on result information at the time after the utterance has been made by utterance unit 140, and updates the score (step S5).

Here, for scores before the execution of the learning, all the scores may be stored in such a way as to have mutually the same value, or the scores may be each stored in such a way as to have a value having been set in advance in accordance with a predicted effect of a corresponding utterance content for a corresponding combination of person information and environment information.

In this way, in the present embodiment, an utterance in response to a captured person and an environment is made, learning is performed based on the result of the utterance, and a score of an utterance content corresponding to the utterance is progressively updated using the result of the learning. Thus, a flexible customer service can be performed.

### [Second Embodiment]

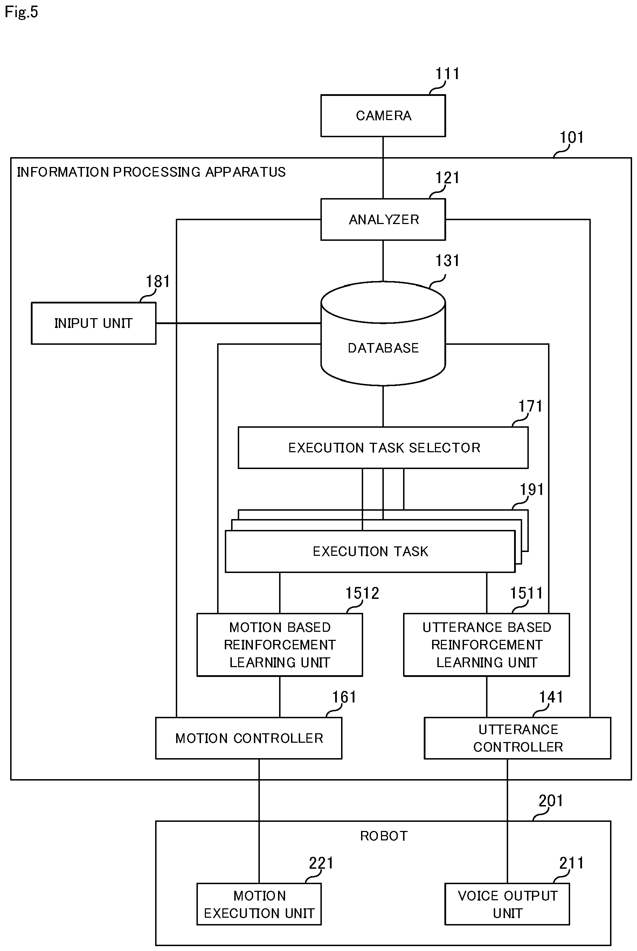

FIG. 5 is a diagram illustrating the second embodiment of the information processing system according to the present invention. As illustrated in FIG. 5, the information processing system in the present embodiment includes Camera 111, information processing apparatus 101, and robot 201. The information processing system illustrated in FIG. 5 is a system which is installed in, for example, a shop for providing foods and drinks, such as coffee and light meals, and in which robot 201 performs customer services. Camera 111 images the vicinity of the shop, and robot 201 makes an utterance and a motion to a person included in the captured image, as a customer candidate or a customer.

Camera 111 is an imaging unit that captures a person who becomes a target. Camera 111 may be a camera for capturing still images, a camera for capturing moving images, or a camera incorporating a depth sensor that can acquire depth information. Furthermore, the timing at which imaging is performed by Camera 111 is not particularly prescribed. Furthermore, Camera 111 is installed at a position where a relative position of a position where a customer exists, relative to a position where products are supplied can be recognized based on an captured image. Furthermore, the number of Camera 111 is not limited to one. Furthermore, Camera 111 may be a camera capable of freely changing an imaging direction based on control from the outside.

Information processing apparatus 101 is an apparatus coupled to Camera 111 and robot 201 and configured to control Camera 111 and robot 201. For example, information processing apparatus 101 may be a PC (Personal Computer) capable of executing software.

Robot 201 outputs predetermined voices and performs predetermined motions based on instructions from information processing apparatus 101. Robot 201 is capable of, for example, cooking and dancing as the predetermined motions.

As illustrated in FIG. 5, information processing apparatus 101 includes analyzer 121, database 131, utterance controller 141, utterance based reinforcement learning unit 1511, motion controller 161, motion based reinforcement learning unit 1512, execution tasks 191, execution task selector 171, and input unit 181. Note that FIG. 5 illustrates only main constituent elements associated with the present embodiment among constituent elements included in information processing apparatus 101.

Analyzer 121 analyzes person information in relation to a person included in an image having been captured by Camera 111. Here, the person information is, just like that in the first embodiment, for example, a position, a sex, an age group, a facial expression, a height, clothes, a race, a spoken language, a person-to-person relationship, order contents, and the like with respect to the person. In order that analyzer 121 analyzes the person from the image based on such person information, any image recognition method that is commonly used in the image recognition may be used, and the analysis method for analyzer 121 is not particularly limited. Furthermore, when it is authenticated (identified) that a person included in the image having been captured by Camera 111 is a customer who is already registered, the person information may be personal identification information granted to the customer (for example, a customer ID number or the like). When personal identification information is already registered, previous order contents (an ordered product, the number of orders, and the like) in relation to a customer who is identified from the personal identification information are also included in the person information. Furthermore, analyzer 121 calculates a relative position of a position where a customer exists, relative to a position where products are supplied, and the like, based on a position where Camera 111 is installed and a position of the person having been captured by Camera 111. Furthermore, analyzer 121 recognizes a person located in front of an order terminal for use in the input of an order by a customer at the time of ordering as an orderer.

Database 131 stores in itself the person information and environment information indicating an environment of the information processing system. Furthermore, database 131 stores in itself information indicating an execution task that execution task selector 171 selects in accordance with task ignition conditions. A specific example of stored information will be described later.

Execution task selector 171 selects a task that is to be executed by information processing apparatus 101 from among the plurality of execution tasks 191 based on the task ignition conditions, and launches the selected task.

Utterance based reinforcement learning unit 1511 performs updating and control of a score that corresponds to an utterance category corresponding to selected and launched execution task 191 and that corresponds to an utterance content included in the utterance category. For each combinations of person information and environment information that have been retrieved from the database 131, utterance based reinforcement learning unit 1511 performs learning and updates a score corresponding to an utterance content, based on result information indicating the results of an utterance having been output by voice output unit 211. Utterance based reinforcement learning unit 1511 collects a piece of result information indicating the result of an utterance having been made by voice output unit 211 and performs learning and update a score based on the collected pieces of result information. The learning performed here is the same as that in the first embodiment. Furthermore, the score here is a value (a first score) resulting from the learning having been performed based on the result information indicating the results of the utterance having been made by voice output unit 211. This score is progressively updated by utterance based reinforcement learning unit 1511 as reinforcement learning is performed. Here, the result information is information including at least one reactions of a customer (for example, a smile ratio and the like), sales information indicating the variations of sales contents and a sales amount (for example, an upsell ratio, a sales increase ratio, and the like), and the like, at the time after voice output unit 211 has made an utterance. The sales information may be information indicating the contents of the sales of a product having been sold based on the input to input unit 181. Note that the above-described reactions of a customer are obtained by the analysis by analyzer 121 based on the person information in relation to the person included in the image having been captured by Camera 111.

Motion based reinforcement learning unit 1512 performs updating and control of a score that corresponds to a motion category corresponding to selected and launched execution task 191 and that corresponds to a piece of motion information included in the motion category. For each combinations of the person information and the environment information that have been retrieved from database 131, motion based reinforcement learning unit 1512 performs learning and updates a score corresponding to a piece of motion information, based on result information indicating the results of a motion having been performed by motion execution unit 221. Motion based reinforcement learning unit 1512 performs learning and updates a score based on result information indicating the results of a motion having been performed by motion execution unit 221. The score here is a value (a second score) resulting from the learning having been performed based on the result information indicating the results of a motion having been performed by motion execution unit 221. This score is progressively updated by motion based reinforcement learning unit 1512 as reinforcement learning is performed. Here, the result information is information including at least one pieces of information at the time after motion execution unit 221 has performed a motion, the pieces of information including reactions of a customer (for example, a smile ratio and the like), sales information indicating the variations of sales contents and a sales amount (for example, an upsell ratio, a sales increase ratio, and the like), and the like. Note that the above-described reactions of a customer are obtained from the analysis by analyzer 121 based on person information in relation to the person included in the image having been captured by Camera 111.

Upon launch of a predetermined execution task among the plurality of execution tasks 191, utterance controller 141 instructs voice output unit 211 included in robot 201 to make an utterance having an utterance content associated with a first score having a maximum value among first scores having been output by utterance based reinforcement learning unit 1511.

Upon launch of a predetermined execution task among the plurality of execution tasks 191, motion controller 161 instructs motion execution unit 221 included in robot 201 to perform a motion indicated by a piece of motion information associated with a second score having a maximum value among second scores having been output by motion based reinforcement learning unit 1512.

Input unit 181 is a unit to which information is input. Input unit 181 may be a unit to which information is input based on an operation having been received from the outside, or may be a unit to which a numeric value having been calculated inside or outside information processing apparatus 101 is input. Input unit 181 may be a unit for use in ordering, and in this case, a product having been ordered based on an operation having been received from the outside is input.

As illustrated in FIG. 5, robot 201 includes voice output unit 211 and motion execution unit 221. Note that FIG. 5 illustrates only main constituent elements associated with the present embodiment among constituent elements included in robot 201.

Voice output unit 211 outputs a voice based on an instruction from utterance controller 141. Voice output unit 211 may be a common speaker. Voice output unit 211 is preferably attached at a position where a voice having been output as if robot 201 were speaking can reach the outside. Note that the number of voice output units 211 is not limited to one, and voice output unit 211 may be installed at a position not inside robot 201. Motion execution unit 221 performs a motion based on an instruction from motion controller 161. Motion execution unit 221 may be, for example, an arm portion constituting robot 201 and configured to perform a motion using a motor or the like. Note that, in the present embodiment, utterance controller 141 and voice output unit 211 are integrated into an utterance unit, and motion controller 161 and motion execution unit 221 are integrated into a motion unit.

Note that the person information, the environment information, and the utterance contents in the present embodiment may be the same as those having been described in the first embodiment. The motion information is information for performing predetermined motions, such as cooking, dancing, and the like.

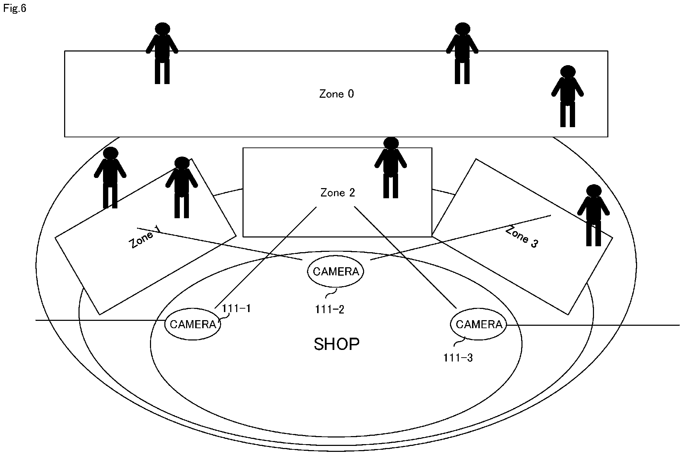

Hereinafter, processing for specifying the positions of persons (customers) having been captured by a camera will be described. FIG. 6 is a diagram for illustrating an example of processing for specifying the positions of persons having been captured by Camera 111 illustrated in FIG. 5. As illustrated in FIG. 6, for example, Cameras 111-1 to 111-3 are installed in a shop, and analyzer 121 specifies the positions of persons based on images having been captured by individual Cameras 111-1 to 111-3. Analyzer 121 specifies that a person who is included in an image having been captured by Camera 111-1 and who exists within a specific zone in a direction seen from Camera 111-1 is located in zone 1 (ZONE 1). Furthermore, analyzer 121 specifies that a person who is included in an image having been captured by Camera 111-2 and who exists within a specific zone in a direction seen from Camera 111-2 is located in zone 2 (ZONE 2). Furthermore, analyzer 121 specifies that a person who is included in an image having been captured by Camera 111-3 and who exists within a specific zone in a direction seen from Camera 111-3 is located in zone 3 (ZONE 3). Furthermore, analyzer 121 specifies that a person who is included in an image having been captured by any one of Cameras 111-1 to 111-3 and who exists within a zone far from the any one of Cameras 111-1 to 111-3 having captured the image is located in zone 0 (ZONE 0). However, without being limited to such a configuration in which a plurality of cameras is used to specify the positions of persons, in this way, a configuration in which one camera is used, and a determination as to within which of zones 0 to 3 (ZONES 0 to 3) each of the persons exists is made based on images having been captured by the camera may be employed. Furthermore, these zones 0 to 3 (ZONES 0 to 3) are defined as follows:
ZONE 0: a zone in the vicinity of a shop; customers passing through and customers having interests are mixed.
ZONE 1: an ordering place; there are a large number of customers who order products.
ZONE 2: a zone adjacent to a shop; there are a large number of customers who are waiting for finished products after ordering.
ZONE 3: a product supply place; there are a large number of customers who take away finished products.

These zones are defined and the associations of the defined zones with actions (utterances and motions) are registered in database 131 in advance. For example, by associating ZONE 0 with an utterance content for calling in the shop, it can be determined to, for a person existing in ZONE 0, take actions for an utterance for calling in the shop and a motion for customer attraction. Furthermore, by associating ZONE 1 with an utterance content for inquiring about a product that is to be ordered, for a person existing in ZONE 1, actions for an utterance and a motion for inquiring about a product that is to be ordered can be taken. In this way, for a target person, appropriate actions corresponding to a zone in which the target person exists can be prepared. Here, the boundaries among the individual zones are specified using four vertex coordinates or the like. Note that it is not necessarily required to respectively associate Cameras 111-1 to 111-3 with ZONES 0 to 3. For example, a configuration in which Camera 111-2 and Camera 111-3 capture a customer existing in ZONE 2, and person information related to the position of the customer, and the like, having been captured by the two cameras is analyzed may be employed.

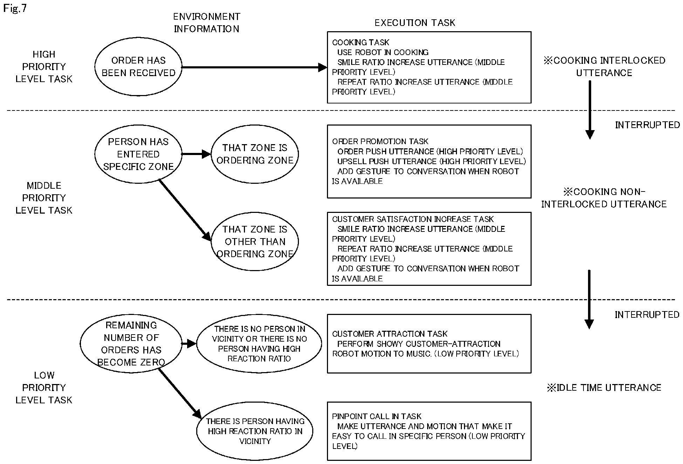

FIG. 7 is a diagram illustrating an example of associations of execution tasks with events capable of being grasped from combinations of the person information and the environment information that are stored in database 131, the associations being referred by execution task selector 171 illustrated in FIG. 5. The associations may be stored in advance in database 131 illustrated in FIG. 5. As illustrated in FIG. 7, the individual tasks are associated in accordance with the positions of persons and environment information indicating operation statuses of the system.

For example, a cooking task is associated with an event "an order has been received". By using this association, when an event as of then is "an order has been received", execution task selector 171 selects the cooking task. Moreover, detailed utterance contents and pieces of motion information are associated with the cooking task, and when the cooking task is executed, robot 201 performs cooking and performs actions in accordance with the utterance contents and the pieces of motion information. The utterance contents at this time are, for example, utterance contents for making an utterance for the increase of a smile ratio and an utterance for the increase of a repeat ratio. These utterance contents are stored in advance in database 131.

Furthermore, an order promotion task is associated with events "a person has entered a specific zone" and "that zone is the ordering zone". By using this association, when events as of then are "a person has entered a specific zone" and "that zone is the ordering zone", execution task selector 171 selects the order promotion task. A determination as to whether "that zone is the ordering zone" is made by analyzer 121 using information indicating the position of the person. For example, when the person has entered ZONE 1 illustrated in FIG. 6, analyzer 121 determines that "that zone is the ordering zone". Moreover, detailed utterance contents and pieces of motion information are associated with the order promotion task, and when the order promotion task is executed, actions in accordance with the utterance contents and the pieces of motion information are performed. The utterance contents at this time are, for example, utterance contents for making an utterance for encouraging the order of a product or an utterance for offering the order of another product. These utterance contents are stored in advance in database 131.

Furthermore, a customer satisfaction increase task is associated with events "a person has entered a specific zone" and "that zone is other than the ordering zone". By using this association, when events as of then are "a person has entered a specific zone" and "that zone is other than the ordering zone", execution task selector 171 selects the customer satisfaction increase task. A determination as to whether "that zone is other than the ordering zone" is made by analyzer 121 using information indicating the position of the person. For example, when the person has entered ZONE 2 or ZONE 3 illustrated in FIG. 6, analyzer 121 determines that "that zone is other than the ordering zone". Moreover, detailed utterance contents and pieces of motion information are associated with the customer satisfaction increase task, and when the customer satisfaction increase task is executed, actions in accordance with the utterance contents and the pieces of motion information are performed. The utterance contents at this time are, for example, utterance contents for making an utterance for increasing the smile ratio and an utterance for increasing the repeat ratio. These utterance contents are stored in advance in database 131.

Furthermore, a customer attraction task is associated with events "the remaining number of orders has become zero" and "there is no person in the vicinity or there is no person having a high reaction ratio". By using this association, when events as of then are "the remaining number of orders has become zero" and "there is no person in the vicinity or there is no person having a high reaction ratio", execution task selector 171 selects the customer attraction task. A determination as to whether "the remaining number of orders has become zero" is made by analyzer 121 using information indicating the operation statuses of the system among the environment information. Furthermore, a determination as to whether "there is no person in the vicinity" is made by analyzer 121, for example, based on whether no person has entered ZONES 0 to 3 illustrated in FIG. 6. A determination as to whether "there is no person having a high reaction ratio" is made by analyzer 121 based on whether, although persons have entered ZONES 0 to 3, there is no facial expression and movement that indicate no interest in ordering of products in the facial expressions and the movements of the persons. Moreover, detailed utterance contents and a piece of motion information are associated with the customer attraction task, and when the customer attraction task is executed, actions in accordance with these utterance contents and piece of motion information are performed. The piece of motion information at this time is, for example, a piece of motion information for performing a showy customer-attraction robot motion to music. This piece of motion information is stored in advance in database 131.

Furthermore, a pinpoint calling in task is associated with events "the remaining number of orders has become zero" and "there is a person having a high reaction ratio in the vicinity". By using this association, when events as of then are "the remaining number of orders has become zero" and "there is a person having a high reaction ratio in the vicinity ", execution task selector 171 selects the pinpoint calling in task. A determination as to whether "the remaining number of orders has become zero" is made by analyzer 121 using information indicating the operation statuses of the system among the environment information. Furthermore, the event "there is a person having a high reaction ratio in the vicinity" is determined by analyzer 121, for example, when persons have entered ZONES 0 to 3 illustrated in FIG. 6 and the facial expression and the movement of any one of the persons having been analyzed by analyzer 121 are a facial expression and a movement that indicate certain interest in ordering of products. Moreover, detailed utterance contents and pieces of motion information are associated with the pinpoint calling in task, and when the pinpoint calling in task is executed, actions in accordance with these utterance contents and pieces of motion information are performed. The utterance contents and the pieces of motion information at this time are, for example, utterance contents and pieces of motion information for performing an utterance and a motion that make it easy to call in a specific person. These utterance contents and pieces of motion information are stored in advance in database 131.

Furthermore, as illustrated in FIG. 7, priority levels are granted to the respective execution tasks. When a task having a higher priority level than a priority level granted to a task is selected, processes are interrupted by the task having a higher priority. This is the same as an interruption process at the time when processes are sequentially executed.

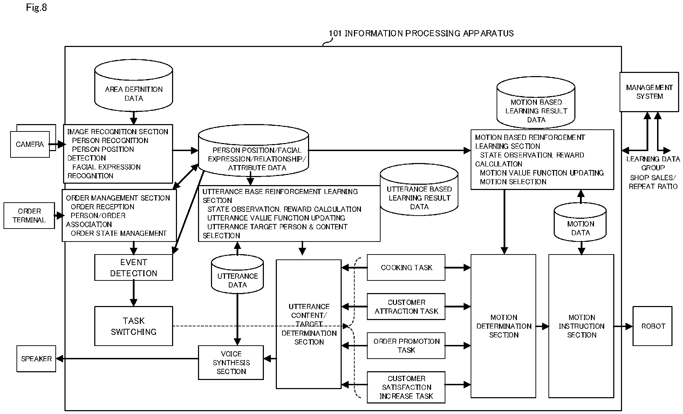

FIG. 8 is a diagram illustrating an example of the configuration of software in the information processing system illustrated in FIG. 5. Information processing apparatus 101 illustrated in FIG. 5 can implement its operation using software having a configuration such as that illustrated in FIG. 8.

An image recognition section performs person recognition, person position detection, and facial expression recognition in relation to images having been captured by a camera. Furthermore, the image recognition section stores information in relation to recognized persons into a person position/facial expression/relationship/attribute database. Here, the relationship means relationships existing among a plurality of persons included in the images having been captured by the camera, and is, for example, information indicating parent and child, friends, or the like. Furthermore, the attribute is information indicating features of each of the persons, such as a sex, an age group, a height, clothes, a race, a spoken language, and the like with respect to the person. This image recognition section can be implemented in analyzer 121 illustrated in FIG. 5. The image recognition section uses area definition data to detect the positions of the persons. The area definition data may be data indicating the matters having been described using FIG. 6, or data using the images having been captured by the camera and coordinates defined at each of positions within an area.

Furthermore, an order management section for managing information having been input from an order terminal to which orders are input by users manages the receptions of the orders, the associations of persons having made the orders (users having performed the inputs) with the contents of the orders, and the order states of the orders. The order management section manages the orders while retrieving necessary information from the person position/facial expression/relationship/attribute database, and writing necessary data into the person position/facial expression/relationship/attribute database.

An event detection section detects an event that become a trigger of processing, based on person information and environment information stored in the person position/facial expression/relationship/attribute database, and the orders having been received by the order management section, and processing for selecting and launching an execution task is performed. When the execution task is selected, switching among the cooking task, the customer attraction task, the order task, and the customer satisfaction increase task is performed.

Furthermore, an utterance based reinforcement learning section performs state observation, reward calculation, and utterance value function updating, and selects utterance target persons/utterance contents, based on the person information and the environment information stored in the person position/facial expression/relationship/attribute database. The utterance based reinforcement learning section selects the utterance contents from among utterance data that is stored in advance. Furthermore, the utterance based reinforcement learning section performs the above-described processes using a database that stores in itself utterance based learning results. An utterance content/target determination section determines, as an utterance content and a target person, an utterance content and a target person corresponding to a task that is to be executed, among the utterance target persons/utterance contents having been selected by the utterance based reinforcement learning section. A voice synthesis section synthesizes, as a voice, the utterance content having been determined by the utterance content/target determination section, and outputs the voice to a speaker.

Furthermore, a motion based reinforcement learning section performs state observation, reward calculation, and motion value function updating, and selects motions using motion based learning result data. The motion based reinforcement learning section selects the motions from among pieces of motion data that are stored in advance. Among the motions having been selected by the motion based reinforcement learning section, a motion determination section determines a motion corresponding to a task that is to be executed, as a motion that is to be executed. A motion instruction section instructs the motion having been determined by the motion determination section to a robot.

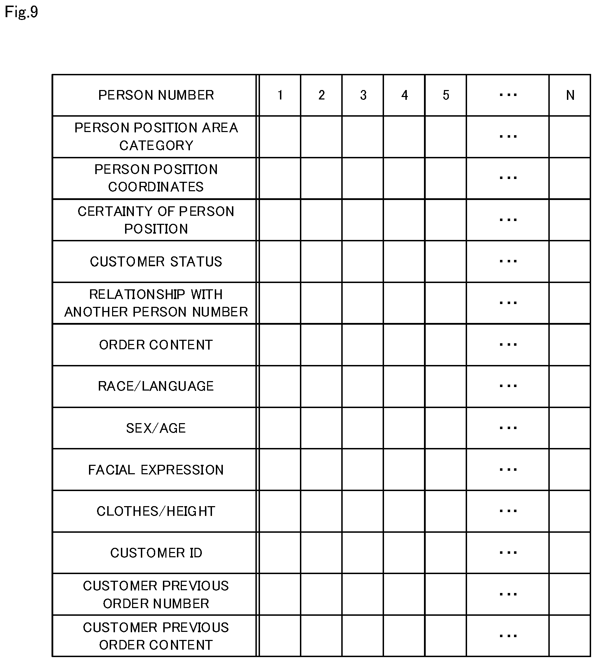

FIG. 9 is a diagram illustrating an example of associations stored in the person position/facial expression/relationship/attribute database illustrated in FIG. 8. As illustrated in FIG. 9, person numbers are given to the respective persons included in the images having been captured by the camera, and for each of the person numbers, a corresponding set of data is registered. Items indicating a person position area category, person position coordinates, and a certainty of the person position correspond to information related to an existing position of each of the persons. The person position area category corresponds to the zones having been described using FIG. 6 such as, for example, an ordering place, a product supply place, a shop surrounding, and a shop vicinity. The certainty of a person position is calculated based on the position of the camera, the characteristics of the camera, a position specification algorithm, and the like. Furthermore, a customer status is information indicating which of a customer, a prospective customer, a potential customer, an onlooking customer, and a passer-by each of the persons included in the images having been captured by the camera. This is a result of the analysis having been made by analyzer 121 based on face authentication, the analysis of facial expressions, an existing position, and a movement with respect to each person, or the like. Furthermore, a relationship with another person number is information indicating a relationship with another person included together with each person in the image, such as parent and child, friends, lovers, or the like. When, as a result of the analysis having been made by analyzer 121 on a person included in the images having been imaged by the camera, the person is a customer having an already registered ID, a customer previous order number and a customer previous order content are two kinds of information indicating the number and the contents of orders having been previously made by the customer. Alternatively, when the person allows the system to read his or her member card, the customer previous order number and the customer previous order content may be two kinds of information that indicate the number and the contents of previous orders having been previously made by the customer, and that are obtained based on information having been read from the member card. These two kinds of information are registered into a database at the time of ordering. Furthermore, by granting a customer ID to a customer having ordered a product and registering the ordered product and the number of orders, preferences of the customer can be learned, and when the customer comes to the shop again, an utterance and a motion for offering a recommended product can be also performed.

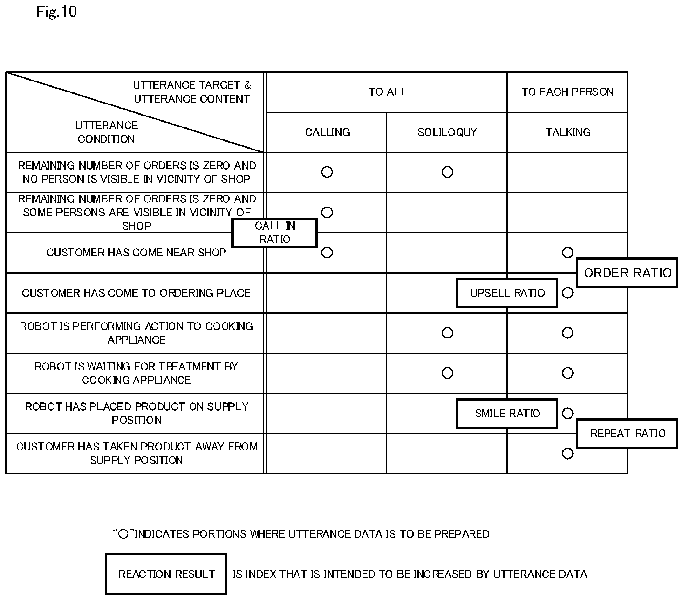

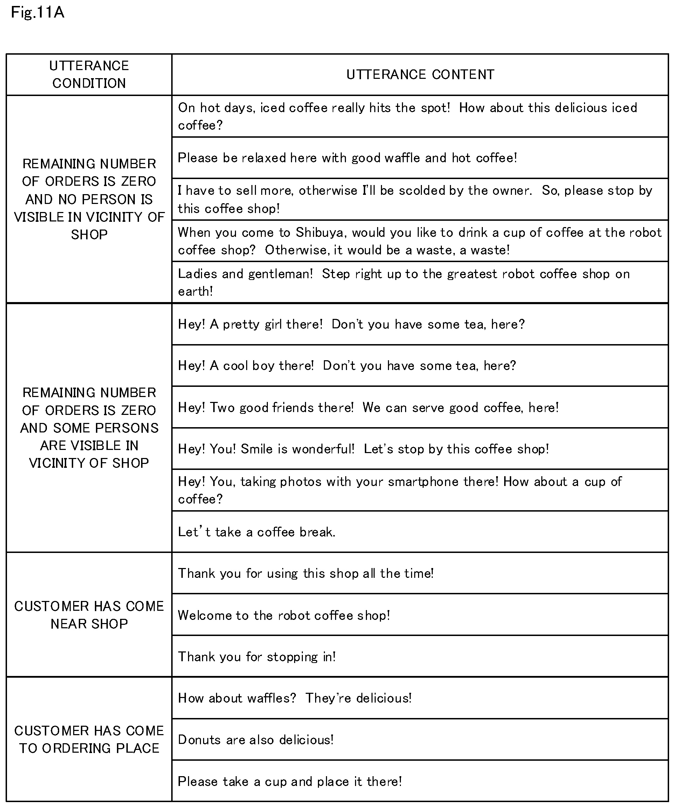

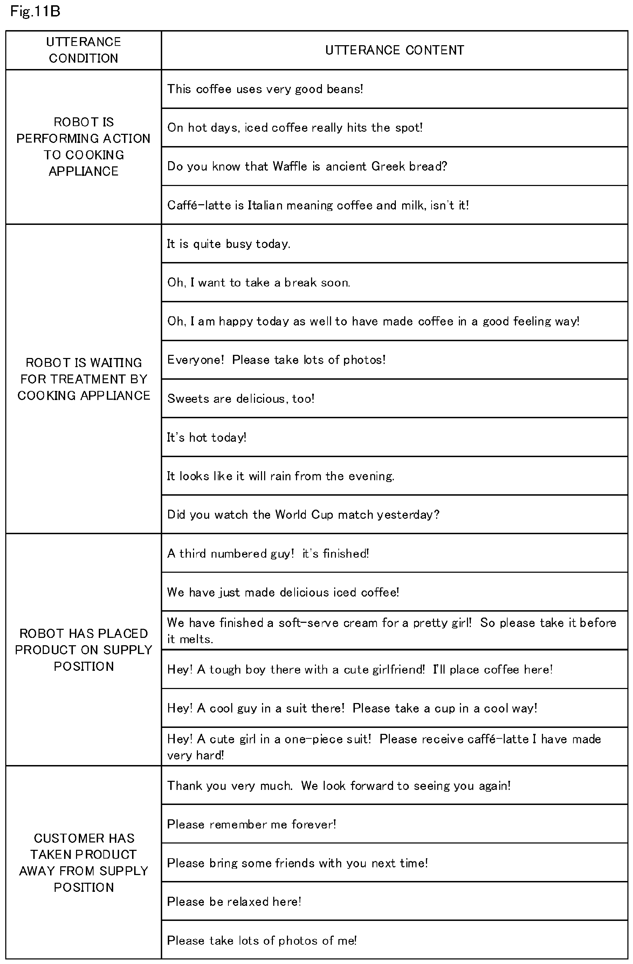

FIG. 10 is a diagram illustrating an example of kinds of the utterance data illustrated in FIG. 8 and indexes intended to be increased by the utterance data. FIGS. 11A and 11B are diagrams illustrating an example of information that is registered as the utterance data illustrated in FIG. 8. These kinds of information are stored in database 131 illustrated in FIG. 5. The utterance data is composed of items shown below.
- utterance-content number
- utterance-content category (greeting source, soliloquy source, news source, product conversation source, individual specification resource, customer praise source, source for foreigners, upsell source)
- utterance ignition condition (shop chain, ordered product category, cooking stage, location category, congestion status, time zone, season, weather/temperature/humidity, special event, person position area, customer status, relationship with another person, race/language, sex, age group, facial expression, clothes, height)
- utterance-content contents (capable of being described in content in such a way that replacement word is written in variable number)
- facial expression at the time when utterance is made
- motion at the time when utterance is made

Particularly, FIG. 10 illustrates a diagram resulting from specifying which of utterances is to be made to which of utterance targets in response to the result of the analysis by analyzer 121 on images having been captured by Camera 111 and a current operation status of the system. Furthermore, FIG. 10 also illustrates what kinds of estimation results are intended to be enhanced by these kinds of utterance data. The estimation results indicate the results of utterances having been made, and indicate the degrees of changes of a calling in ratio, an order ratio, an upsell ratio, a smile ratio, and a repeat ratio. For example, when talking to an individual person is performed in a state in which a robot places a product at a supply position, or a state in which a customer has taken away a product from the supply position, an index indicating that an utterance for increasing the repeat ratio is to be made is shown (denoted by "○ " in FIG. 10).

Furthermore, as illustrated in FIGS. 11A and 11B, for specific utterance data, a plurality of specific utterance contents that are to be uttered in the result of the analyses by analyzer 121 on images having been captured by Camera 111 and a current operation status of the system are stored. In the plurality of utterance contents, utterance contents expressed by foreign languages other than the Japanese language are also stored, and utterance contents expressed by the English language, the Chinese language, the Korean language, and the like may be also stored. Furthermore, the plurality of utterance contents is stored in such a way as to be capable of being selected in response to various attributes and the like with respect to persons that becomes targets. Furthermore, for the plurality of utterance contents, any one of these is selected in accordance with the estimation result. That is, an utterance content of the highest estimation is selected.

The utterance based learning result data that is output as the results of utterances having been made is composed of items shown below.
- utterance value function learning result data
- data necessary for batch learning in a plurality of shops (utterance ignition condition, utterance-content number, utterance-content contents, utterance-content replacement word, utterance reaction result).

These are progressively updated by reinforcement learning, based on the variations of sales contents and the facial expressions of target persons at the time after the utterances have been made.

The motion data is composed of items shown below.
- motion-content number
- motion category (cooking motion, customer attraction motion, customer service motion)
- motion ignition condition (shop chain, ordered product category, cooking stage, location category, congestion status, time zone, season, weather/temperature/humidity, special event)
- motion-content contents
- music-content contents
- whole playing time
- maximum interruption disabled time
- facial expression at the time when motion is performed

The motion-content number is, for example, a number in relation to data for moving the arm of robot 201. The facial expression at the time when a motion is performed is information that, when a function of representing a facial expression on a face portion of robot 201 (for example, a display for displaying the image of a face) is implemented, indicates the facial expression that is to be displayed on the display. The facial expression at the time when a motion is performed may be information for allowing facial expressions shown below to be displayed, for example.
- facial expression having strength in eyes when utterance is made in such a way as to speak to specific person
- facial expression having excited feeling when in a state of waiting for order
- facial expression representing appreciation when having received order
- facial expression representing motion with snap and energy while cooking
- nihilistic facial expression when uttering soliloquy
- healing facial expression when calling customer to hand product to the customer

The motion based learning result data that is output as the results of motions having been performed is composed of items shown below.
- motion value function learning result data
- data necessary for batch learning in a plurality of shops (motion ignition condition, motion-content number, motion contents, music contents, motion reaction result)

These are progressively updated by reinforcement learning, based on the variations of sales contents and the facial expressions of target persons at the time after the motions have been performed.

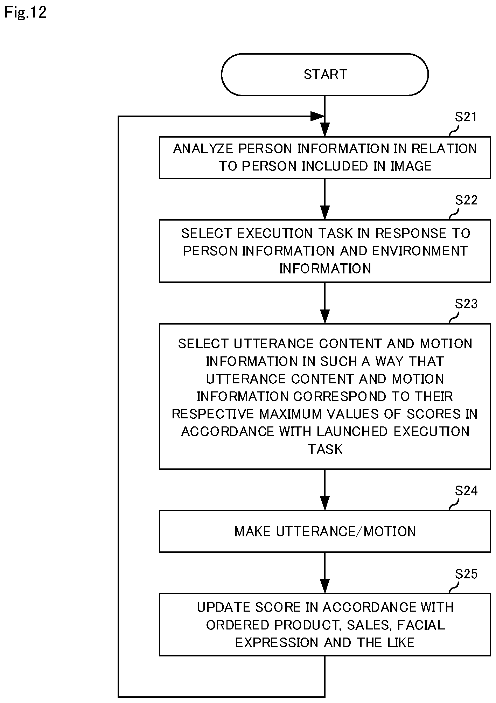

Hereinafter, an information processing method in the information processing system illustrated in FIG. 5 will be described. FIG. 12 is a flowchart for illustrating an example of the information processing method in the information processing system illustrated in FIG. 5.

Firstly, Camera 111 performs imaging, and transmits an image resulting from the imaging to information processing apparatus 101. Then, analyzer 121 analyzes person information that is related to a person included in the image having been transmitted from Camera 111 and that includes a person position, and then stores the analyzed person information into database 130 (step S21). For example, analyzer 121 performs analysis about in which zone among a plurality of zones, as illustrated in FIG. 6, the target person exists, and from which zone to which zone among the plurality of zones the target person is moving.

Subsequently, execution task selector 171 selects execution task 191 based on the person information and environment information (task ignition conditions) having been stored in database 130 (step S22). System operation statuses included in the environment information at this time indicate, for example, a state in which cooking is performed, a state in which a shop is crowded, a state in which the remaining number of orders has become zero, a state in which the number of customers to be served has become zero, and the like. As having been described using FIG. 7, execution task selector 171 selects a task that is to be executed. Subsequently, utterance controller 141 selects an utterance content in accordance with scores that utterance based reinforcement learning unit 1511 has output in accordance with execution task 191 having been selected and launched by execution task selector 171. At this time, utterance controller 141 selects an utterance content corresponding to a score having a maximum value among scores that utterance based reinforcement learning unit 1511 has output for a combination of the person information and the environment information having been stored in database 130. Furthermore, motion controller 161 selects a piece of motion information in accordance with scores that motion based reinforcement learning unit 1512 has output in accordance with execution task 191 having been selected and launched by execution task selector 171. At this time, motion controller 161 selects a piece of motion information corresponding to a score having a maximum value among scores that motion based reinforcement learning unit 1512 has output for a combination of the person information and the environment information having been stored in database 130 (step S23).

Subsequently, utterance controller 141 transmits the selected utterance content to voice output unit 211, and instructs voice output unit 211 to make a corresponding utterance. Furthermore, motion controller 161 transmits the selected piece of motion information to motion execution unit 221 and instructs motion execution unit 221 to perform a corresponding motion. Then, voice output unit 211 makes the instructed utterance, and motion execution unit 221 performs the instructed motion (step S24).

Thereafter, based on the changes related to ordered products, sales contents, the facial expression of the target person, and the like, and having been caused in response to the utterance and the motion, utterance based reinforcement learning unit 1511 and motion based reinforcement learning unit 1512 each perform reinforcement learning to update the score (step S25). For example, when a sales amount has been increased, utterance based reinforcement learning unit 1511 and motion based reinforcement learning unit 1512 respectively increase a score of the utterance content corresponding to the utterance having been made and a score of the piece of motion information corresponding to the motion having been performed. Furthermore, when the sales amount has been decreased, utterance based reinforcement learning unit 1511 and motion based reinforcement learning unit 1512 respectively decrease a score of the utterance content corresponding to the utterance having been made and a score of the piece of motion information corresponding to the motion having been performed. These scores may be objects that are each called "reward" in reinforcement learning. In this way, a shop status, a customer status, the attributes of an utterance target person, an utterance content, and a motion content at the time when an utterance and a motion has been performed are brought into a learning state, and in accordance with reward calculation values that are calculated based on the reaction result of the target person relative to the utterance, the reaction result of the target person relative to the motion, the change of the sales amount of products, and the like, value functions in relation to utterance contents and motion information are updated. Through this method, reinforcement learning aiming to achieve most highly effective utterance target, utterance content, and motion is performed.

Note that the practiced reinforcement learning may be executed across a plurality of shops. That is, the obtained results from the learning based on the reactions of customers may be shared by the plurality of shops. In this case, the management system illustrated in FIG. 8 may be a system that manages the results having been obtained through learning at the plurality of shops, as a data group, and allows the learning results being managed to be shared by the plurality of shops. Furthermore, the above learning method may be executed for each product, for each store, or for each store area.

For the person recognition, the person position detection, the facial expression recognition, and the like in such image recognition learning, the learning accuracy is expected to be increased early through the execution of common learning at all shops to which the system has been applied. Furthermore, in reinforcement learning that, for an utterance ignition condition and a motion ignition condition, determines most highly effective utterance contents and most highly effective motion/music contents, the learning result accuracy is expected to be increased through the execution of batch learning for each kind of contents across groups of chain shops, kinds of supplied products, or areas.

In this way, in the present embodiment, an utterance and a motion are performed in response to person information in relation to a person included in an image having been captured by a camera and environment information; learning is performed based on the results of the utterance and the motion; and scores of an utterance content and a piece of motion information are progressively updated using the results of the learning. That is, it is progressively learned that, in response to a captured person and environments, which kinds of utterance and motion to what kind of person in what kind of status bring about effective customer service. Accordingly, flexible customer services can be performed.

Heretofore, the description has been made by allocating the individual functions (processes) to the individual constituent elements, respectively, but an allocation method therefor is not limited to the above-described allocation method. Furthermore, for the configuration of the constituent elements, the configurations of the above-described embodiments are absolutely examples, and the present invention is not limited to the above-described configurations.

### [Reference Signs List]

- 101: information processing apparatus
- 110: imaging unit
- 111, 111-1 to 111-3: camera
- 120, 121: analyzer
- 130, 131: database
- 140: utterance unit
- 141: utterance controller
- 150: reinforcement learning unit
- 161: motion controller
- 171: execution task selector
- 181: input unit
- 191: execution task
- 201: robot
- 211: voice output unit
- 221: motion execution unit
- 1501: reward calculation unit
- 1502: update unit
- 1503: value function calculation unit
- 1511: utterance based reinforcement learning unit
- 1512: motion based reinforcement learning unit

## Claims

1. An information processing system comprising:
an imaging unit;
an analyzer that analyzes a person information in relation to a person included in an image having been captured by said imaging unit;
a database that stores in itself the person information and environment information indicating an environment in which said information processing system is installed;
an utterance unit that makes an utterance having an utterance content in response to the person information and the environment information; and
a reinforcement learning unit that retrieves the person information and the environment information from said database, and that, for each combinations of the person information and the environment information that have been retrieved, performs learning to update a first score corresponding to the utterance content, based on result information indicating a result of the utterance having been made by said utterance unit;
wherein said utterance unit makes the utterance having the utterance content associated with the first score having a maximum value of the first score for the combination.

2. The information processing system according to claim 1, further comprising an execution task selector that selects and launches a task to be executed, based on a task ignition condition using the person information and an operation status of said information processing system, the operation status being included in the environment information,
wherein said utterance unit operates in accordance with the task having been launched by said execution task selector.

3. The information processing system according to claim 1 further comprising a motion unit that performs a predetermined motion,
wherein said database stores in itself motion information indicating a motion content of the motion in a way that allows further association of the motion information,
wherein said motion unit performs a motion indicated by motion information associated with a second score having a maximum value of the second score for the combination, and
wherein said reinforcement learning unit performs learning to update the second score, based on result information indicating a result of the motion having been performed by said motion unit.

4. The information processing system according to claim 3, further comprising an execution task selector that selects and launches a task to be executed, based on a task ignition condition indicating an operation status of said information processing system, the operation status being included in the environment information,
wherein said motion unit operates in accordance with the task having been launched by said execution task selector.

5. The information processing system according to any one of claims 1 to 4, further comprising an input unit to which information is input,
wherein the result information includes at least one of person information in relation to a person included in an image having been captured by the imaging unit after the utterance has been made, and sales information indicating a content of sales of a product having been sold based on an input to said input unit.

6. The information processing system according to any one of claims 1 to 5, wherein the environment information includes at least one item having a date when said imaging unit has performed imaging and a processing load status of said information processing system.

7. An information processing system comprising:
a camera;
a robot; and
an information processing apparatus,
wherein said information processing apparatus includes
an analyzer that analyzes a person information in relation to a person included in an image having been captured by said camera,
a database that stores in itself the person information and environment information indicating an environment in which said information processing system is installed,
an utterance controller that instructs said robot to make an utterance having an utterance content in response to the person information and the environment information, and
a reinforcement learning unit that retrieves the person information and the environment information from said database, and that, for each combinations of the person information and the environment information that have been retrieved, performs learning to update a first score corresponding to the utterance content, based on result information indicating a result of the utterance having been instructed by said utterance controller,
wherein said utterance controller instructs said robot to make the utterance having the utterance content associated with the first score having a maximum value of the first score for the combination, and
wherein said robot includes a voice output unit that outputs a voice indicated by the utterance content having been instructed by said utterance controller.

8. An information processing method in an information processing system, comprising:
processing for analyzing a person information in relation to a person included in an image having been captured by a camera;
processing for, from a database that stores in itself the person information and environment information indicating an environment in which said information processing system is installed, retrieving the person information and the environment information;
processing for making an utterance having an utterance content associated with a first score having a maximum value for a combination of the person information and the environment information that have been retrieved; and
processing for performing learning to update the first score based on result information indicating a result of the utterance having been made.
